# EUROPEAN PATENT APPLICATION

(11) **EP 1 288 126 A2**
(43) Date of publication of application: **05.03.2003**
(21) Application number: 02077946.8
(22) Date of filing: 18.07.2002
(51) Int. Cl.: B65B 5/08, B65B 35/40, B65G 47/71

(54) **Method and device for filling a holder tray with bags filled with a liquid-like substance**

(30) Priority: 23.07.2001 NL 1018612
(71) Applicant: Nutricia N.V., 2700 MA Zoetermeer (NL)
(72) Inventor: Krijgsman, Alexander Patrick, 2731 EZ Benthuizen (NL); Loeve, Pieter, 2651 PR Berkel en Roodenrijs (NL)
(74) Representative: Jorritsma, Ruurd

(57) **Abstract**

The invention relates to a method for filling a holder tray (5) with bags filled with a liquid-like substance. The holder tray (5) is sub-divided by partitions into m rows (9) of n+1 bays (8) each. The bays have a bay width in the direction of extent of the rows and transversely thereto a bay length. The method comprises the steps a), b) and c). In step a) filled bags (10) are supplied by the use of a supply track (2). In step b) the bags supplied in step a) are deposited by the supply track (2) one by one onto a distribution track (3) and the distribution track, with the bags located thereon, is then moved over a distance equal to the bay width. Step b) is repeated n times. Then step c) is executed by expelling n+1 consecutive bags transversely from the distribution track (3) into a row (9). The invention further relates to a device especially suitable for applying the method according to the invention.

## Description

The present invention relates to a method for filling a holder tray with bags filled with a liquid-like substance, the holder tray being sub-divided, especially by partitions, into m rows of n+1 bays each of a predetermined bay width in the direction of extent of the rows, n and m each being an integral number greater than or equal to zero; and the method comprising the following steps:
a) supplying the filled bags by the use of a supply track,
c) transferring filled bags to respectively one of the, in particular empty, bays of the holder tray.

Such a method and a device for applying such a method are known. Inter alia, such a method, together with a device suitable for this purpose, is currently used by the applicant as a component part of a packing line for packing bags filled with drip feed. At the start of the packing line, the bags are filled, labelled, etc., so as then to be passed on or fed via a supply track to follow-on steps. This supply track leads to a complex manipulation device for preparing the subsequent packing into boxes, where the bags filled with drip feed are removed from the supply track so as each to be laid into an own bay of a holder tray sub-divided by partitions into bays. This transfer from the supply track to, or, more precisely, into the bays is effected by picking up from the supply track the bags filled with drip feed, each by means of a grab provided with suction pads, and then hoisting each of them, displacing them and laying them in an empty bay of the holder tray. This method, in particular the device used in this case, is relatively highly prone to breakdown. The bags filled with drip feed are delivered to a relatively inaccurately defined location to be picked up by a grab, are then picked up relatively inaccurately by the grab, so as then to be laid, again relatively inaccurately, in the bays. It should herein be borne in mind that bags filled with liquid-like substance, such as drip feed, are not fully dimensionally stable and, moreover, can vary in dimensions. The result of all this is that, in practice, it very frequently occurs that these bags end up inaccurately in the bay in question and that an operator has to intervene. It also happens that the grabs obtain an insufficient grip of the filled bags. These problems, as a result of the relatively weak dimensional stability of the filled bags and of the not infrequent variation in the dimensions of the bags, cannot or can only scarcely be tackled by improving the control system by which the grabs are manipulated. Hold-up resulting from standstill of the packing glue is caused, in respect of more than 90% of the cases, by breakdowns in the manipulation method/device for laying the filled bags in the holder tray. The time loss attributable to the breakdowns in the manipulation method/device amounts in practice to a good 10 to 20% of the time which is used by the packing line per se. Apart from loss of time, the frequent breakdowns also result in a permanent operator being present at the manipulation device.

The object of the present invention is to provide an improved manipulation method, in particular one which is less prone to breakdowns, and a manipulation device for filling a holder tray with bags filled with a liquid-like substance such as, inter alia, drip feed.

This is achieved, as regards the method, with the method according to Claim 1, in particular the part of the method described in the characterizing clause thereof.

As regards the device, the aforementioned object is achieved by making available a device according to Claim 6.

A major advantage of the method and device according to the invention is that these can be easily realized with little or no susceptibility to breakdowns, despite the fact that the bags to be manipulated, filled with liquid-like substance such as drip feed, are difficult to manipulate due to their moderate to poor dimensional stability. This is achieved by having the supply track open out onto a distribution track and by a supplied, filled bag being placed thereon, the bags being deposited one by one, and by the distribution track then being displaced over a distance approximately equal to the bay width of the bays before a following bag is deposited thereon. This is repeated at least n times, so that a row of placed apart bags is formed on the distribution track, having a length equal to at least the number of bays in a row. Preferably after having executed step b) n+1 times, possibly as new steps b) are being executed, according to the invention step c) is executed by simply expelling n+1 consecutive bags, preferably simultaneously, transversely from the distribution track and placing them in a row of bays of the holder tray. The holder tray can in this case be located close to, immediately next to and/or beneath the distribution track, at least the row thereof which is due to be filled. The filled bags then fall more or less directly into the bays concerned. In the method and device according to the invention, the picking-up and displacement of filled bags by means of a grab is no longer necessary. The filled bags can be guided right into the bay concerned of the holder tray wholly by means of guides, conveyors, stops and pushing members, without the bags suffering leaks or minor damage in the process.

In order to fill a holder tray having a plurality of rows, it is preferable according to the invention if the bays, viewed transversely to the bay width, have a predetermined bay length and if, after step c), the holder tray is displaced over the bay length in the longitudinal direction and step b) is repeated n+1 times, and step c) and possibly step a) are repeated, in particular n+1 times. Regarding the possible repetition of step a), it should be noted that it is conceivable simply to halt the supply of filled bags with the supply track whenever a filled bag has been delivered to the distribution track or whenever filled bags are expelled from the distribution track. It is also conceivable, however, to have the feed proceed without interruption and to provide at the end of the supply track an end zone where filled bags can be stockpiled and/or pulled apart from one another by means of, for example, consecutive conveyor belt sections operating at different speeds. It is in this case conceivable to provide a final conveyor belt section, which is respectively put into operation to deliver a filled bag to the distribution track at just the right moment.

According to the invention it is further preferable if, after step b) has been executed n+1 times and step c) m times, the filled holder tray is transported away and an empty holder tray supplied. As will be clear, the whole of this can be done by automation. In order to allow the filled bags to be placed more accurately in the bay after having been expelled from the distribution track, it is preferable according to the invention if in step c) the n+1 bags are pushed from the distribution track onto a loading track and the n+1 bags are laid by means of the loading track and from the loading track into the row of bays. The loading track can be a downward-sloping, for example obliquely sloping, chute, along which the filled bags slide downwards under the influence of gravity so as to land at some speed and also, therefore, with extra reliability in the row of bays situated at the end of the loading track. The loading track can also, however, be a drive-operated conveyor. In this context, a drive-operated roller conveyor or a drive-operated conveyor of the continuous belt type may be considered, for example. Such a loading track might also from the distribution track elevate the filled bags to a greater height. When the bags are laid in the bays, it is preferable if the loading track, at least over the last part thereof, slopes down in a downward direction. The realization of a drive-operated loading track additionally allows the filled bags to be delivered into the bays at a certain speed, thereby improving the accuracy of delivery. The advantage of a drive-operated loading track over a loading track of chute construction is in this respect that the delivery speed of the bags into the bays can be more accurately controlled.

In order to improve the positioning accuracy on the distribution track and, in particular, also the guidance of the bags as they are expelled from the distribution track, it is preferable according to the invention if the distribution track is sub-divided, by means of ribs fitted transversely thereon, into sections having a length, in the longitudinal direction of the distribution track, approximately equal to the predetermined bay width. For analogous reasons, it is advantageous according to the invention if the loading track is divided up into mutually parallel sections having longitudinal guides on both sides.

Since, in practice, the device according to the invention will also be sold without a holder tray and possibly also even without a holder tray track, which will often already be available to the customer, the invention according to Claim 12 also relates to a device according to the invention containing no holder tray or holder tray track.

The present invention will be explained in greater detail below with reference to an illustrative embodiment represented diagrammatically in the drawing, in which:
Fig. 1 shows a diagrammatic, perspective view of a device according to the invention which is especially suitable for applying the method according to the invention;
Fig. 2 shows a diagrammatic side view of a device according to the invention, a sliding member in a retracted, inactive position;
Fig. 3 shows a view analogous to that in Fig. 2, but with the sliding member in an extended, active position;
Fig. 4 shows a diagrammatic top view of the device according to the invention in a state comparable with that according to Fig. 2; and
Fig. 5 shows a top view in accordance with Fig. 4, but with the device according to the invention in a state comparable with that from Fig. 3.

In the illustrative embodiment shown in the drawing, the device 1 according to the invention comprises a supply track 2, a distribution track 3, a loading track 4, and a holder tray track 6 supporting a holder tray 5 and a sliding member 7.

In the illustrated example, the holder tray 5 consists of three rows 9 lying side by side in the direction of the double arrow R (thus the m from the claims is here 3) and containing five bays 8 each (thus the n from the claims is here 4). According to the invention, the number of bays will, in particular, be greater than or equal to 2 and/or, according to the invention, the number of rows will, in particular, be greater than or equal to 2. Each bay has a bay width in the direction of the double arrow C and a bay length in the direction of the double arrow R. The bay width and bay length are dimensioned such that a bag 10 filled with a liquid-like substance fits herein, more particularly in each bay of greater dimensions than such a bag 10.

The supply track 2 is made up of three sections. Section 11, only the end of which is shown, is the general supply track by which the filled bags are fed from a previously discussed station. Section 12 forms a buffer zone at which filled bags supplied by means of the general supply track 11 can be amassed, lying in a row. Section 13 of the supply track 2 runs obliquely down to the distribution track 3 and serves to deliver filled bags one by one onto the distribution track. To this end, section 13 will accept the filled bag from section 12 and deliver it to a distribution track 3 as soon as it is driven to do so by control means (not shown). Sections 11, 12 and 13 are all represented as being of the continuous belt type, conveying from right to left in the drawings as indicated by the arrows. It should be clear, however, that the supply track sections 11, 12 and 13 do not need to be mutually identical in type and that one or more of these sections might also be realized as, for example, a roller conveyor. The distribution track is constructed as a continuous conveyor belt 20, which, under the command of the control means (not shown) and in accordance with the arrow V, can be moved forward in steps over distances approximately equal to the bay width of the bays 8, viewed in the direction of the double arrow C. On the continuous conveyor belt 20, ribs 14 are provided. These ribs 14, viewed in the direction of transport V of the conveyor belt 20, are placed apart with a mutual spacing approximately equal to that of the bay width (viewed in the direction of the double arrow C). The distribution track 3 is thus sub-divided into distribution sections 22, which can each receive a filled bag from the supply track 2 as soon as the distribution section 22 concerned is aligned with the supply track 2. In the illustrative embodiment shown, the distribution track 3 can thus contain a maximum of six filled bags 10. With regard to the distribution track 3, it should be noted that, in the illustrative embodiment shown, this runs transversely to the supply track 2. It is also, however, quite conceivable for the distribution track 3 to run in the same direction as the supply track 2, in which case the distribution track 3 would run, in particular, in extension of the supply track 2. Intermediate oblique positions are also conceivable. In order to prevent a filled bag delivered by the delivery section 13 from being able to shoot off from the distribution track 3, a stop 15 is provided on that side of the distribution track 3 facing away from the delivery section 13.

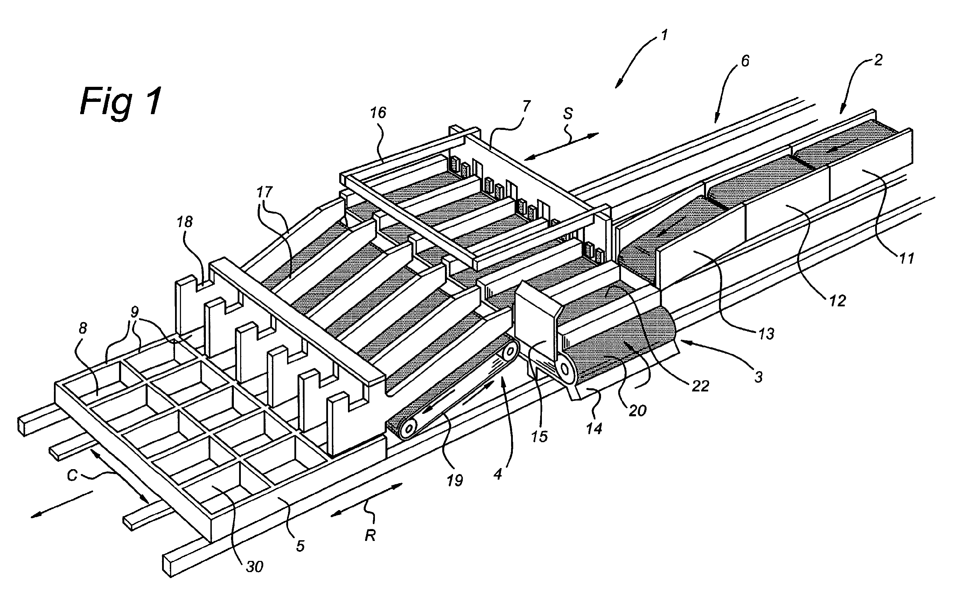

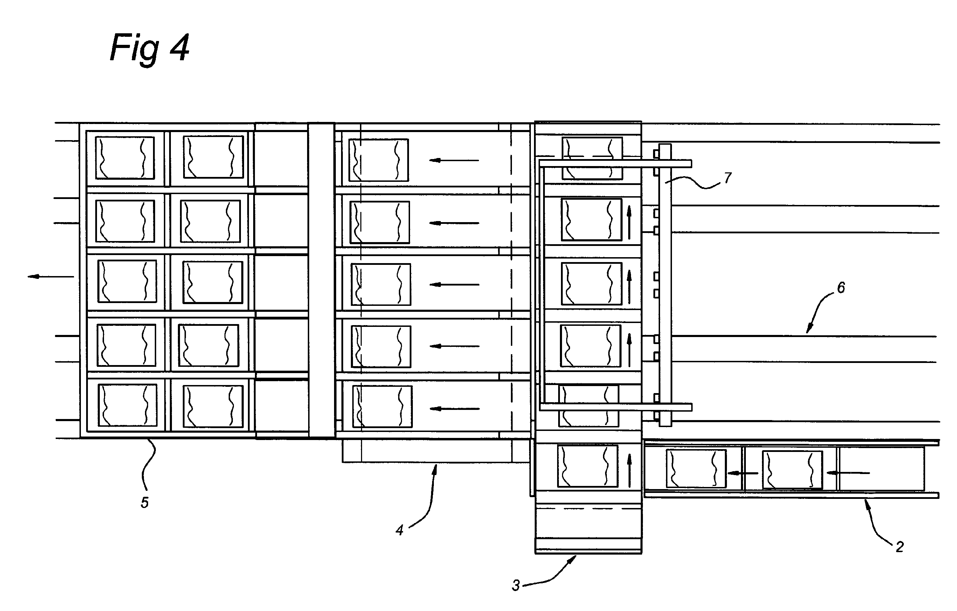

Alongside the distribution track 3, a sliding member 7 is provided, which can move to and fro along the guide 16 in accordance with the double arrow S. In Figures 1, 2 and 4, the sliding member 7 is represented in the inactive, retracted position. From this inactive, retracted position, the sliding member 7 will be driven by the control members (not shown) to slide from right to left in the drawing as soon as all distribution sections 22 situated before the slider 7 have been filled with a filled bag. The said bags will then be expelled on the left from the distribution track 3 by the sliding member 7 and will land on the loading track 4, which is yet to be discussed in greater detail below. The sliding member 7 is of comb-like construction, as it were, so that it can grip with recesses around the ribs 14 on the distribution track 20. This has the added advantage that if the control means at any moment command the sliding member 7 to expel filled bags present on the distribution track whilst the distribution track is not in the correct position, the sliding member 7 will hit against the right-hand end faces of the ribs 14 and will thereby be arrested.

Extending obliquely downwards from the distribution track 3 is a continuous, one-piece conveyor belt 19 driven in accordance with the arrows here shown. Along the top surface of this continuous conveyor belt 19, guide plates 17 are provided, which, upon correct command of the distribution track, when the sliding member enters into operation, will lie in alignment with the ribs 14. The guide plates 17 continue at the bottom end of the loading track 19 into end guide plates 18, which are situated precisely above the partitions 30 of the holder tray which delimit the bays 8 in the row direction of the double arrow C). It is conceivable, depending on the dimensions of the bags 10, to replace the guide plates 17, 18 as a unit by another guide unit matched to the bag dimensions concerned. When connected to the distribution track 3, the guide plates 17 will then, especially in the case of smaller bags, delimit a feed hopper which narrows in the direction of the holder tray 5. By matching the sideways spacing, in the direction of the double arrow C), between the guide plates 17 and 18, to the width, or narrowness, of the filled bags 10 to be processed, these bags 10, especially in the case of narrower bags 10, can be prevented from assuming a wrong, in particular an oblique or transverse orientation on the loading track 4 or possibly in the bays 8, which could lead to breakdowns. As soon as one row 9 of a holder tray 5 is filled with bags 10, the holder tray track 6 will further transport the holder tray 5 to the right or left (according to choice) in the direction of the double arrow R over a distance approximately equal to the bay length of the bays 8 viewed in the direction of the double arrow R. After this, the adjacent row 9 will then be filled with filled bags, etc., until the entire holder tray is filled with bags. As soon as the entire holder tray 5 is filled with bags, this shall be transported away by means of the holder tray track 6 and the holder tray track 6 will supply a following holder tray 5 due to be filled and will position it in its place beneath the guide plates 18.

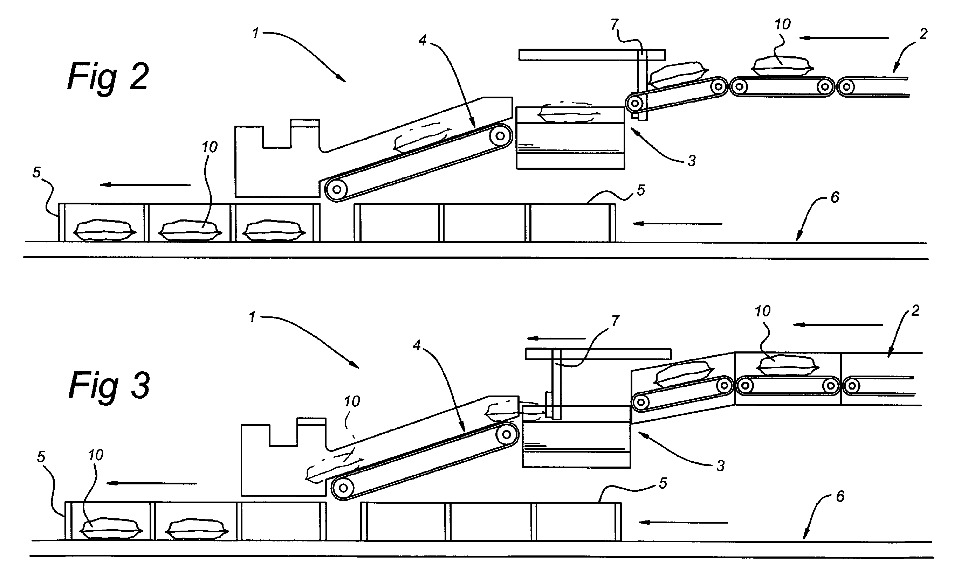

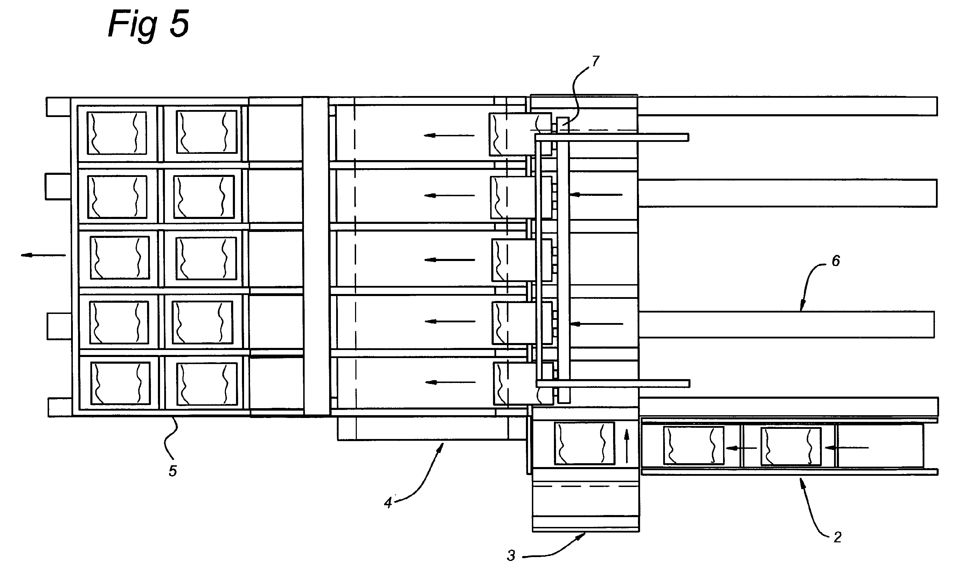

In Figures 2, 3, 4 and 5, all this is illustrated in yet greater detail in side view and top view and in the active and inactive state of the sliding member. Following the above, these figures will be self-explanatory.

## Claims

1. Method for filling a holder tray with bags filled with a liquid-like substance, the holder tray being sub-divided, especially by partitions, into m rows of n+1 bays each of a predetermined bay width in the direction of extent of the row, n and m each being an integral number greater than or equal to zero; and the method comprising the following steps:
a) supplying the filled bags by the use of a supply track,
c) transferring filled bags to respectively one of the, in particular empty, bays of the holder tray,
**characterized in that**:
• in a step b) the bags supplied in step a) are deposited by the supply track one by one onto a distribution track and the distribution track, with the bags located thereon, is then advanced over a distance equal to the bay width of the bays,
• step b) is repeated n times, and
• then step c) is executed by expelling n+1 consecutive bags, preferably simultaneously, transversely from the distribution track and placing them in a row of, in particular empty, bays of the holder tray,
the holder tray running with its rows parallel to the distribution track and preferably being situated lower than the distribution track.

2. Method according to Claim 1, in which the bays, viewed transversely to the bay width, have a predetermined bay length and in which, after step c), the holder tray is displaced over the bay length in the longitudinal direction and step b) is repeated n+1 times, and step c) is repeated, in particular m-1 times.

3. Method according to Claim 2, in which after step b) has been executed n+1 times and step c) m times, the filled holder tray is transported away and an empty holder tray supplied.

4. Method according to one of the preceding claims, in which in step c) the n+1 bags are pushed from the distribution track onto a loading track and the n+1 bags are laid by means of the loading track and from the loading track into the row of bays.

5. Method according to Claim 4, in which the loading track slopes downwards from the distribution track, in particular slopes obliquely down, and in which the loading track preferably is a conveyor which is driven in the downward direction.

6. Device, especially for applying the method according to one of the preceding claims, the device comprising:
• a supply track for supplying filled bags:
• a distribution track onto which the supply track opens out with its discharge end and which is preferably situated at the same height as or at a lower height than the discharge end of the supply track;
• a sliding member which can be moved to and fro over the distribution track transversely thereto so as to be able to push filled bags lying on the distribution track off the latter;
• a holder tray or, at least, a holder tray track, preferably situated lower than the distribution track; and
• control means;
the holder tray being sub-divided, especially by partitions, into m rows of n+1 bays each of predetermined row width in the direction of extent of the row, n and m each being an integral number greater than or equal to zero; and
the control means, on the one hand, being actively connected to the supply track, the distribution track and the sliding member and, on the other hand, being designed to
• in a step b) deposit the bags supplied with the supply track one by one onto the distribution track and then to advance the distribution track, with the bag or bags located thereon, over a distance equal to the predetermined width of the bays,
• repeat step b) n times, and
• then in step c) expel with the sliding member n+1 consecutive bags transversely from the distribution track in the direction of a row of, in particular empty, bays of the holder tray.

7. Device according to Claim 6, in which the distribution track is sub-divided, by means of ribs fitted transversely thereon, into sections having a length, in the longitudinal direction of the distribution track, approximately equal to the predetermined width of the bays.

8. Device according to Claim 6 or 7, in which the device further comprises a loading track extending in the transverse direction of the distribution track from this distribution track to the row of bags to be filled.

9. Device according to Claim 8, in which the loading track is a drive-operated, or at least drive-operable conveyor.

10. Device according to Claim 8 or Claim 9, in which the loading track runs downwards from the distribution track, in particular obliquely downwards.

11. Device according to one of Claims 6-10, in which the control means are actively connected to the holder tray and are designed to displace the holder tray m-1 times over in each case a predetermined bay length, viewed transversely to the transverse width, as soon as a row of bays has been filled with filled bags.

12. Device according to one of Claims 6-11, containing no holder tray.
